# DEMANDE DE BREVET EUROPEEN

(11) **EP 3 667 758 A1**
(43) Date de publication de la demande: **17.06.2020**
(21) Numéro de dépôt: 19215458.1
(22) Date de dépôt: 12.12.2019
(51) Int. Cl.: H01M 2/02, H01M 10/6563

(54) **COFFRE À BATTERIE**

(30) Priorité: 13.12.2018 FR 1872887
(71) Demandeur: ALSTOM Transport Technologies, 93400 Saint-Ouen-sur Seine (FR)
(72) Inventeur: ABOU-EID, Rami, 75018 Paris (FR); CHEVALIER, Philippe, 92500 Rueil Malmaison (FR); DAPVRIL, Lionel, 56260 Larmor Plage (FR)
(74) Mandataire: Lavoix

(57) **Abrégé**

L'invention concerne un coffre à batterie (10) comprenant :
- une enceinte (12) contenant un gaz ;
- au moins un bloc de batterie (14) électrique disposé dans l'enceinte (12) ; et
- un dispositif de refroidissement configuré pour refroidir le gaz contenu dans l'enceinte (12), le dispositif de refroidissement comprenant au moins un échangeur thermique (16) disposé dans l'enceinte (12) pour un échange thermique entre le gaz et un premier fluide de refroidissement circulant dans l'échangeur thermique (16).

## Description

La présente invention concerne un coffre à batterie, notamment un coffre à batterie de véhicule, en particulier de véhicule ferroviaire.

Un coffre à batterie comprend une enceinte contenant une batterie ou tout autre type de système de stockage électrique propre à fournir de l'électricité aux équipements embarqués et aux moteurs d'un véhicule ferroviaire.

Une batterie est apte à fournir une certaine puissance électrique. Afin d'obtenir une puissance électrique suffisante à l'alimentation des équipements, il est connu d'utiliser plusieurs blocs de batterie et de les installer côte à côte dans un coffre à batterie. Les blocs de batterie sont ainsi situés au même endroit ce qui permet leur branchement électrique sur un circuit commun.

La production d'électricité par un bloc de batterie s'accompagne d'une production de chaleur au moment de la réaction électrochimique. L'assemblage de plusieurs batteries dans un coffre à batterie conduit donc à une forte production de chaleur. Une température élevée dans le coffre à batterie a un impact négatif sur le rendement et la durée de vie des blocs de batterie. Il est donc nécessaire de refroidir le coffre à batterie pour garantir un fonctionnement optimal des blocs de batterie.

Dans US 9 379 420, les blocs de batterie sont disposés côte à côte avec une plaque solide placée entre chaque paire de batterie adjacente. La plaque solide composée de métal ou de graphite est apte à conduire la chaleur produite par les blocs de batterie. Une plaque de refroidissement dans laquelle circule un fluide de refroidissement est située sous les blocs de batterie et est couplée thermiquement aux plaques solides. La chaleur produite par les batteries circule dans les plaques solides et dans la plaque de refroidissement. La chaleur est extraite par le fluide de refroidissement, le fluide de refroidissement circulant dans un circuit de refroidissement afin d'évacuer la chaleur.

Une telle solution ne permet pas une maintenance facile et optimale d'une batterie ou d'une plaque défectueuse. En effet, les batteries et les plaques sont intégrées dans un même système et liées mécaniquement entre elles. La maintenance d'un seul élément défectueux nécessite donc le démontage de l'ensemble du système, rendant la maintenance longue et fastidieuse.

Un des buts de l'invention est d'obtenir un coffre à batterie permettant une maintenance rapide et aisée pour remplacer une batterie, tout en permettant un refroidissement préservant un fonctionnement satisfaisant des batteries.

A cet effet, l'invention a pour objet un coffre à batterie comprenant une enceinte contenant un gaz ; au moins un bloc de batterie électrique disposé dans l'enceinte ; et un dispositif de refroidissement configuré pour refroidir le gaz contenu dans l'enceinte, le dispositif de refroidissement comprenant au moins un échangeur thermique disposé dans l'enceinte pour un échange thermique entre le gaz et un premier fluide de refroidissement circulant dans l'échangeur thermique.

Suivant des modes particuliers de réalisation, le coffre à batterie comprend l'une ou plusieurs des caractéristiques suivantes, prise(s) isolément ou suivant toute combinaison techniquement possible :
- le premier fluide de refroidissement est un fluide caloporteur, par exemple de l'eau et/ou du glycol ;
- chaque bloc de batterie électrique est du type à refroidissement par gaz, le gaz étant de préférence de l'air ;
- chaque échangeur thermique est sous forme de plaque, chaque plaque étant propre à être retirée de l'enceinte indépendamment du ou des blocs de batterie électrique ;
- chaque plaque est disposée verticalement, soit entre des blocs de batterie, soit entre une paroi de l'enceinte et un bloc de batterie ;
- le coffre à batterie comprend au moins un ventilateur apte à forcer la circulation du gaz dans l'enceinte ;
- le coffre à batterie comprend au moins un capteur thermique propre à mesurer la température du gaz dans l'enceinte ; et un ensemble de commande configuré pour contrôler la température et/ou le débit du premier fluide de refroidissement circulant dans l'au moins un échangeur thermique en fonction d'un signal de mesure fourni par l'au moins un capteur thermique ;
- l'ensemble de commande comprend au moins un dispositif de mesure comprenant au moins un débitmètre propre à mesurer le débit du premier fluide de refroidissement circulant dans l'au moins un échangeur thermique et/ou au moins un capteur thermique additionnel propre à mesurer la température du premier fluide de refroidissement dans l'au moins un échangeur thermique ; et une unité de commande électronique configurée pour contrôler la température et/ou le débit du premier fluide de refroidissement circulant dans l'au moins un échangeur thermique en fonction de signaux de mesure fournis par l'au moins un débitmètre et/ou l'au moins un capteur thermique ;
- l'au moins un échangeur thermique est lié thermiquement à un circuit frigorifique pour le refroidissement du premier fluide de refroidissement ; et
- le circuit de frigorifique fait partie d'un système de climatisation d'un habitacle d'un véhicule, le coffre à batterie équipant ledit véhicule.

L'invention concerne également un véhicule, notamment de transport public, comprenant un coffre à batterie tel que défini ci-dessus.

L'invention sera mieux comprise à la lecture de la description qui va suivre, donnée uniquement à titre d'exemple, et faite en se référant aux dessins annexés, sur lesquels :
- [Fig 1] la Figure 1 est une vue schématique d'un coffre à batterie;
- [Fig 2] la Figure 2 est une vue schématique d'un coffre à batterie selon une variante;
- [Fig 3] la Figure 3 est une vue schématique d'un véhicule ferroviaire comprenant un coffre à batterie.

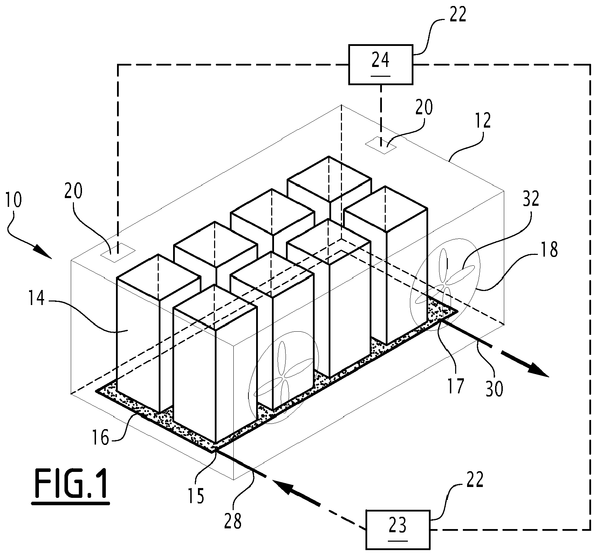

Le coffre à batterie illustré sur la Figure 1 comprend une enceinte 12 dans laquelle sont situés des blocs de batterie 14 électrique à refroidissement par gaz, une plaque de refroidissement 16, une paire de ventilateurs 18, deux capteurs thermiques 20 et un ensemble de commande 22.

L'enceinte 12 est étanche au gaz et contient un gaz. Le gaz contenu dans l'enceinte est ici de l'air.

L'enceinte 12 est de forme parallélépipédique. L'enceinte 12 comprend par exemple un bac présentant une ouverture supérieure et un couvercle fermant l'ouverture supérieure.

Chaque bloc de batterie 14 est un dispositif de stockage électrochimique configuré pour le stockage d'énergie électrique sous forme chimique. Chaque bloc de batterie comprend une cellule électrochimique ou plusieurs cellules électrochimiques connectées électriquement entre elles. Les cellules électrochimiques d'un bloc de batterie comprenant plusieurs cellules électrochimiques sont par exemple empilées les unes sur les autres.

Les blocs de batterie 14 ont par exemple une forme parallélépipédique. Les blocs de batterie 14 sont ici allongés verticalement.

Les blocs de batterie 14 sont répartis dans l'enceinte 12 en étant espacés les uns des autres, de sorte qu'ils sont séparés les uns des autres par une lame de gaz. Chaque bloc de batterie 14 est séparé du ou de chaque bloc de batterie 14 adjacent par une lame de gaz.

Les blocs de batterie 14 sont par exemple disposés sous forme matricielle dans l'enceinte 12. Le coffre à batterie 10 comprend des rangées parallèles de blocs de batterie 14. Le coffre à batterie 12 comprend ici quatre rangées de deux blocs de batterie 14.

Il y a absence de contact entre les différents blocs de batterie 14, les blocs de batterie 14 étant séparés d'une lame d'air. Les blocs de batterie 14 reposent sur la plus petite face du parallélépipède.

Chaque bloc de batterie 14 est configuré pour stocker et fournir de l'électricité. L'électricité alimente des équipements embarqués et/ou des moteurs d'un véhicule, par exemple d'un train.

Le chargement ou le déchargement de chaque bloc de batteries 14 entraine une production de chaleur par ce bloc de batteries 14, et il convient de refroidir les blocs de batterie 14.

Chaque bloc de batteries 14 est du type à refroidissement par gaz, plus particulièrement par air. Chaque bloc de batteries 14 comprend de manière connue des dissipateurs de chaleur et/ou des ventilateurs pour évacuer la chaleur produite par le bloc de batterie par échange de chaleur avec le gaz ambient dans lequel se situe le bloc de batteries 14.

Les blocs de batterie 14 échangent leur chaleur avec le gaz de l'enceinte 12. La chaleur produite par les blocs de batterie 14 est donc transférée au gaz de l'enceinte 12 qui s'échauffe.

La plaque de refroidissement 16 est un échangeur thermique dans lequel circule un premier fluide de refroidissement, en vue d'un échange thermique entre ce premier fluide de refroidissement et le gaz contenu dans l'enceinte 12.

La plaque de refroidissement 16 possède une entrée 15 et une sortie 17 pour le premier fluide de refroidissement. La plaque de refroidissement 16 comprend par exemple des canaux internes pour la circulation du premier fluide de refroidissement à l'intérieur de la plaque de refroidissement 16. L'entrée et la sortie du premier fluide de refroidissement dans une plaque de refroidissement 16 sont ici situées sur des côtés opposés de la plaque de refroidissement 16.

La plaque de refroidissement 16 est un échangeur thermique liquide/gaz ou gaz/gaz configuré pour un échange thermique entre le premier fluide de refroidissement à l'état liquide ou gazeux et le gaz contenu dans l'enceinte 12.

Le premier fluide de refroidissement est un fluide caloporteur. Le premier fluide de refroidissement est par exemple de l'eau. En variante, le premier fluide de refroidissement est du glycol ou un mélange eau/glycol.

La plaque de refroidissement 16 est configurée pour échanger de la chaleur entre le gaz de l'enceinte 12 et l'eau circulant dans la plaque de refroidissement 16. Le gaz de l'enceinte 12 est ainsi refroidi par la plaque de refroidissement 16.

Le coffre à batterie 10 comprend une ou plusieurs plaque(s) de refroidissement 16 disposée(s) dans l'enceinte 12.

Comme illustré par la Figure 1, le coffre à batterie 10 comprend une plaque de refroidissement 16 disposée horizontalement et au-dessous des blocs de batterie 14.

En variante ou en option, le coffre à batterie 10 comprend une plaque de refroidissement 16 disposée horizontalement et au-dessus des blocs de batterie 14.

En variante ou en option, le coffre à batterie 10 comprend une ou plusieurs plaques de refroidissement 16 disposée(s) verticalement.

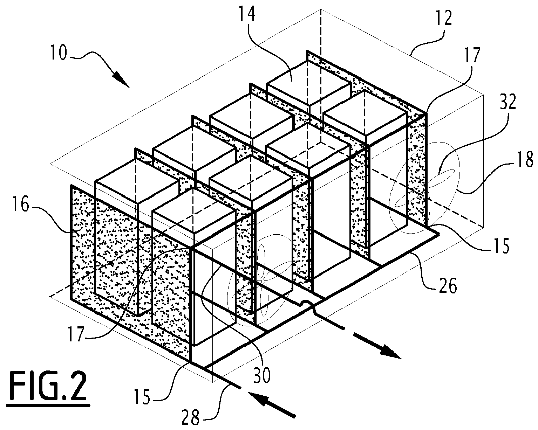

Dans l'exemple illustré sur la Figure 2, le coffre à batterie 10 comprend plusieurs plaques refroidissement 16 disposées verticalement entre les blocs de batterie 14.

Plus spécifiquement, le coffre à batterie 10 comprend des plaques de refroidissement 16 intermédiaires, chaque plaque de refroidissement 16 intermédiaire étant disposée entre des blocs de batterie 14. Le coffre à batterie 10 comprend également des plaques de refroidissement 16 d'extrémité, disposées aux extrémités de l'enceinte 12.

Les plaques de refroidissement 16 sont disposées verticalement et transversalement à la direction longitudinale de l'enceinte 12, entre les rangées de blocs de batterie 14.

En variante ou en option, des plaques de refroidissement 16 sont disposées verticalement et parallèlement à la direction longitudinale de l'enceinte 12, entre les blocs de batterie 14 et/ou à côté des blocs de batterie 14.

De manière générale, le coffre à batterie 10 peut comprendre une ou plusieurs plaque(s) de refroidissement 16 disposée(s) horizontalement au-dessous des blocs de batterie 14 et/ou une ou plusieurs plaque(s) de refroidissement 16 disposée(s) au-dessus des blocs de batterie 14, et/ou une ou plusieurs plaque(s) de refroidissement 16 disposée(s) verticalement et longitudinalement, et/ou une ou plusieurs plaque(s) de refroidissement 16 disposée(s) perpendiculairement et transversalement.

Lorsque le coffre à batterie 10 comprend plusieurs plaques de refroidissement 16, ces plaques de refroidissement 16 sont par exemple reliées fluidiquement en parallèle entre elles afin de former un dispositif de refroidissement 26 du gaz de l'enceinte 12. Le dispositif de refroidissement 26 possède une entrée 28 et une sortie 30.

Le coffre à batterie 10 comprend en option au moins un ventilateur 18 pour forcer la circulation du gaz contenu dans l'enceinte 12.

Chaque ventilateur 18 comprend une hélice 32 motorisée pour la mise en mouvement du gaz de l'enceinte 12.

Dans l'exemple illustré, le coffre à batterie 10 comprend deux ventilateurs 18 situés sur une face latérale de l'enceinte 12. Le gaz contenu dans l'enceinte 12 est ici de l'air.

En l'absence de mouvement de l'air dans l'enceinte 12, le mode de transfert thermique entre les blocs de batterie 14 et l'air est un mode de convection naturelle. Les coefficients d'échange associés à ce mode de transfert thermique pour l'air sont de l'ordre de 5 à 10 W/m²/K. La mise en mouvement forcée de l'air par les ventilateurs 18 permet de passer dans un mode d'échange thermique entre les blocs de batterie 14 et l'air de l'enceinte 12 qui est un mode de convection forcée. Les coefficients d'échange associés à ce mode de transfert thermique pour l'air sont de l'ordre de 10 à 100 W/m²/K. L'échange thermique entre les blocs de batterie 14 et l'air de l'enceinte 12 est donc fortement augmenté au moyen des ventilateurs 18.

Le coffre à batterie 10 comprend au moins un capteur thermique 20, ici deux capteurs thermiques 20, pour mesurer la température du gaz contenu dans l'enceinte 12.

Avantageusement, les capteurs thermiques 20 sont éloignés l'un de l'autre afin de mesurer la température à des endroits différents de l'enceinte 12 et ainsi d'obtenir une température moyenne du gaz dans l'enceinte 12.

Les capteurs thermiques 20 sont disposés sur les parois de l'enceinte 12.

Le coffre à batterie 10 comprend un ensemble de commande 22 comportant d'un dispositif de mesure 23 et d'une unité de commande électronique 24.

Le dispositif de mesure 23 est configuré pour mesurer le débit et/ou la température du premier fluide de refroidissement circulant dans le dispositif de refroidissement 26.

Le dispositif de mesure 23 est situé à l'entrée du dispositif de refroidissement 26.

Le dispositif de mesure 23 comprend par exemple un capteur thermique additionnel configuré pour mesurer la température de l'eau circulant dans les plaques de refroidissement 16 et/ou un débitmètre configuré pour mesurer le débit du premier fluide de refroidissement circulant dans les plaques de refroidissement 16.

L'unité de commande électronique 24 est connectée aux capteurs thermiques 20 et au dispositif de mesure 23 pour recevoir des signaux de mesures fournis par les capteurs thermiques 20 et le dispositif de mesure 23.

L'unité de commande électronique 24 est configurée pour contrôler la température et/ou le débit du premier fluide de refroidissement pénétrant dans les plaques de refroidissement 16 en fonction des mesures de températures du gaz de l'enceinte 12.

En cas de mesure de valeurs de température du gaz de l'enceinte 12 trop importantes pour le fonctionnement optimal des blocs de batterie 14, l'unité de commande électronique 24 augmente le débit et/ou diminue la température de l'eau pénétrant dans les plaques de refroidissement 16 afin d'extraire plus de chaleur dans le gaz de l'enceinte 12.

Inversement, en cas de mesure de valeurs de température du gaz de l'enceinte 12 trop faibles pour le fonctionnement optimal des blocs de batterie 14, l'unité de commande électronique 24 diminue le débit et/ou augmente la température de l'eau pénétrant dans les plaques de refroidissement 16 afin d'extraire moins de chaleur dans le gaz de l'enceinte 12.

Quel que soit le mode de réalisation de l'invention, les plaques de refroidissement sont propres à être retirées du coffre à batterie 10 sans avoir à manipuler les blocs de batterie 14. Avantageusement, chaque plaque de refroidissement 16 est distante des blocs de batterie 14, c'est-à-dire qu'elle n'est pas en contact physique avec l'un des blocs de batterie 14.

Le coffre à batterie 10 selon l'invention permet donc de refroidir les blocs de batterie 14 afin de permettre leur fonctionnement optimal tout en permettant une maintenance rapide et aisée pour remplacer un bloc de batterie 14 ou une plaque de refroidissement 16 défectueuse.

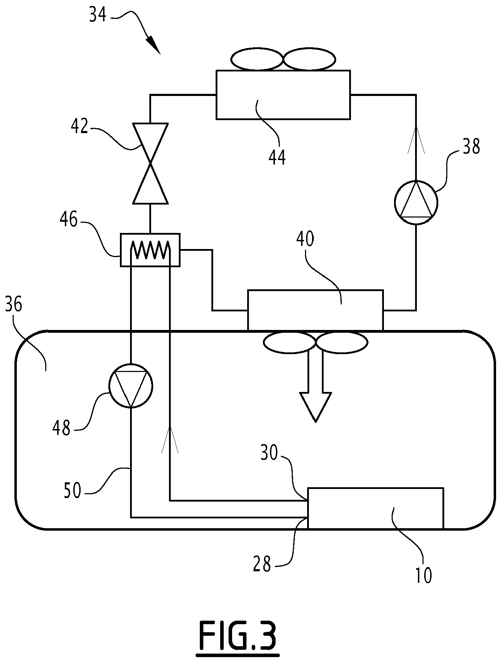

Avantageusement, le dispositif de refroidissement 26 est couplé thermiquement à un circuit frigorifique 34, illustré sur la Figure 3, configuré pour la circulation d'un fluide réfrigérant.

Avantageusement, le circuit frigorifique 34 est un système de climatisation d'une salle 36. La salle 36 est avantageusement un habitacle d'un véhicule de train, tel qu'une salle de passagers.

Le circuit frigorifique 34 comprend, en série, un compresseur 38, un condenseur 44, une vanne d'expansion 42, un évaporateur 40 et un échangeur de chaleur 46.

Le compresseur 38 est configuré pour mettre en pression et augmenter la température du fluide réfrigérant circulant sous forme gazeuse dans le compresseur 38.

Le condenseur 44 est configuré pour faire condenser le fluide réfrigérant circulant dans le condenseur 44 et ainsi faire céder de l'énergie par le fluide réfrigérant au milieu extérieur.

La vanne d'expansion 42 est configurée pour diminuer la pression et la température du fluide réfrigérant circulant sous forme liquide dans la vanne d'expansion 42.

L'évaporateur 40 est configuré pour faire évaporer le fluide réfrigérant circulant dans l'évaporateur 40 et ainsi refroidir l'air ambient de la salle 36.

Le coffre à batterie 10 est situé dans la salle 36.

Le dispositif de refroidissement 16 est couplé thermiquement au circuit réfrigérant 34 par l'intermédiaire d'un échangeur de chaleur 46. L'échangeur de chaleur 46 est disposé en série entre la vanne d'expansion 42 et l'évaporateur 40, de façon à prélever des frigories en amont de l'évaporateur 40. Dans une variante, l'échangeur de chaleur 46 est disposé dans le circuit frigorifique 34 en parallèle de l'évaporateur 40.

L'échangeur de chaleur 46 est configuré afin de faire céder de la chaleur par l'eau circulant dans le dispositif de refroidissement 26 au fluide réfrigérant circulant dans le circuit frigorifique 34.

Le coffre à batterie 10 comprend ici un circuit de refroidissement 50 reliant fluidiquement le dispositif de refroidissement 26 à l'échangeur de chaleur 46.

Le circuit de refroidissement 50 comprend une pompe 48 configurée pour faire circuler le premier fluide de refroidissement entre le coffre à batterie 10 et l'échangeur de chaleur 46.

Le coffre à batterie 10 selon l'invention permet ainsi un refroidissement des blocs de batterie 14 sans circuit frigorifique 34 spécifique, l'eau circulant dans les plaques de refroidissement 16 étant refroidie par le système frigorifique 34 d'un habitacle 36 d'un véhicule de train. Le coffre à batterie 10 permet ainsi un fonctionnement optimal des blocs de batterie 14 sans surcoût.

## Revendications

1. Coffre à batterie (10) comprenant :
- une enceinte (12) contenant un gaz ;
- au moins un bloc de batterie (14) électrique disposé dans l'enceinte (12) ; et
- un dispositif de refroidissement (26) configuré pour refroidir le gaz contenu dans l'enceinte (12), le dispositif de refroidissement (26) comprenant au moins un échangeur thermique (16) disposé dans l'enceinte (12) pour un échange thermique entre le gaz et un premier fluide de refroidissement circulant dans l'échangeur thermique (16).

2. Coffre à batterie (10) selon la revendication 1 dans lequel chaque bloc de batterie (14) électrique est du type à refroidissement par gaz, le gaz étant de préférence de l'air.

3. Coffre à batterie (10) selon l'une quelconque des revendications précédentes dans lequel chaque échangeur thermique (16) est sous forme de plaque, chaque plaque étant propre à être retirée de l'enceinte (12) indépendamment du ou des blocs de batterie (14) électrique.

4. Coffre à batterie (10) selon la revendication 3 dans lequel chaque plaque est disposée verticalement, soit entre des blocs de batterie (14), soit entre une paroi de l'enceinte (12) et un bloc de batterie (14).

5. Coffre à batterie (10) selon l'une quelconque des revendications précédentes comprenant au moins un ventilateur (18) apte à forcer la circulation du gaz dans l'enceinte (12).

6. Coffre à batterie (10) selon l'une quelconque des revendications précédentes comprenant :
- au moins un capteur thermique (20) propre à mesurer la température du gaz dans l'enceinte (12) ; et
- un ensemble de commande (22) configuré pour contrôler la température et/ou le débit du premier fluide de refroidissement circulant dans l'au moins un échangeur thermique (16) en fonction d'un signal de mesure fourni par l'au moins un capteur thermique (20).

7. Coffre à batterie (10) selon la revendication 6 dans lequel l'ensemble de commande (22) comprend :
- au moins un dispositif de mesure (23) comprenant au moins un débitmètre propre à mesurer le débit du premier fluide de refroidissement circulant dans l'au moins un échangeur thermique (16) et/ou au moins un capteur thermique additionnel propre à mesurer la température du premier fluide de refroidissement dans l'au moins un échangeur thermique (16) ;
- une unité de commande électronique (24) configurée pour contrôler la température et/ou le débit du premier fluide de refroidissement circulant dans l'au moins un échangeur thermique (16) en fonction de signaux de mesure fournis par l'au moins un débitmètre et/ou l'au moins un capteur thermique.

8. Coffre à batterie (10) selon l'une quelconque des revendications précédentes dans lequel l'au moins un échangeur thermique (16) est lié thermiquement à un circuit frigorifique (34) pour le refroidissement du premier fluide de refroidissement.

9. Coffre à batterie (10) selon la revendication 8 dans lequel le circuit de frigorifique (34) fait partie d'un système de climatisation d'un habitacle (36) d'un véhicule, le coffre à batterie (10) équipant ledit véhicule.

10. Véhicule, notamment de transport public, comprenant un coffre à batterie (10) selon l'une quelconque des revendications précédentes.
